# EUROPEAN PATENT SPECIFICATION

(11) **EP 3 030 045 B1**
(45) Date of publication and mention of the grant of the patent: **05.07.2017**
(21) Application number: 15169720.8
(22) Date of filing: 28.05.2015
(51) Int. Cl.: H05B 6/64, F24C 7/02, F24C 15/20, F24C 15/00

(54) **OVER-THE-RANGE MICROWAVE OVEN AND METHOD OF USING THE SAME**
OVER-THE-RANGE-MIKROWELLENOFEN UND VERFAHREN ZUR VERWENDUNG DAVON
FOUR À MICRO-ONDES À HOTTE INTÉGRÉE ET SON PROCÉDÉ D'UTILISATION

(30) Priority: 05.12.2014 KR 20140174470
(43) Date of publication of application: 08.06.2016
(73) Proprietor: Dongbu Daewoo Electronics Corporation, Seoul 135-523 (KR)
(72) Inventor: IMM, Jun Hyuk, 135-523 Seoul (KR); LEE, Jong Jin, 135-523 Seoul (KR)
(74) Representative: Rau, Schneck & Hübner Patentanwälte Rechtsanwälte PartGmbB

(56) References cited:
- EP-A2- 1 220 577
- KR-A- 20130 036 415
- US-A- 4 886 046
- US-A1- 2008 156 793
- US-A1- 2008 156 794

## Description

### TECHNICAL FIELD

The present disclosure relates to an over-the-range microwave oven in which a structure of an air discharge flow path of an air discharge duct is improved.

### BACKGROUND

In general, an over-the-range microwave oven refers to a microwave oven that has a function of discharging air, and the over-the-range microwave oven is disposed to be spaced apart from an upper side of a gas range in order to implement the aforementioned function.

Recently, in the over-the-range microwave oven, an air discharge unit is provided in an air discharge duct so that a conveying flow rate of air is typically about 680 m³/h (= 400 CFM).

However, when performance of the air discharge unit is increased in order to improve efficiency of air discharge performance, there is a problem in that a turbulent flow occurs in the air discharge unit, noise is increased, or electric power is excessively consumed, and as a result, efficiency of the over-the-range microwave oven deteriorates.

The prior art documents KR 2013 0036415 A, US 4 886 046 A and US 2008/156793 A1 disclose over-the-range microwave ovens showing the features of the preamble of claim 1. They obviously suffer from the problems discussed above.

Therefore, it is urgently needed to develop an over-the-range microwave oven which may effectively convey air, may be excellent in terms of electric power consumption characteristics, and may have a flow path that reduces noise, even though performance of the air discharge unit is increased.

### SUMMARY

The present disclosure has been made in an effort to provide a hood or an over-the-range microwave oven which is excellent in terms of electric power consumption characteristics, and has an improved structure that reduces noise, by preventing the occurrence of a turbulent flow in a duct even though output of an air discharge unit is increased.

This object is achieved by an over-the-range microwave oven according to claim 1 including: a housing which defines an external appearance; a cooking unit which is disposed in the housing; a duct unit which is disposed in the housing; a first plate which is disposed between the housing and the cooking unit, forms a flow path, and forms a bottom surface of the duct unit; and at least a pair of second plates which is disposed at both lateral sides of the first plate and disposed so that an interval therebetween is decreased from one side end toward the other side end.

In addition, the over-the-range microwave oven further includes an air discharge unit which is disposed at the rear of the housing and allows air to flow into the inlet hole, in which the air discharge unit includes an air discharge motor, and an impeller which is operated by the air discharge motor and allows air to flow into the inlet hole.

In addition, the over-the-range microwave oven further includes a third plate which is disposed at the rear of the pair of second plates and has an inlet hole into which air flows.

In addition, the third plate includes a first inlet hole, and a second inlet hole, and the impeller includes a first impeller which is disposed at one side of the air discharge motor so as to allow air to flow into the first inlet hole, and a second impeller which is disposed at the other side of the air discharge motor so as to allow air to flow into the second inlet hole.

In addition, the third plate further includes a bent portion which protrudes forward between the first inlet hole and the second inlet hole.

According to a preferred embodiment of the invention the bent portion may be formed to become narrower toward the front side.

According 2 a further preferred embodiment of the invention the bent portion may be formed in a trapezoidal shape.

In addition, the pair of second plates may preferably include: a pair of first portions which is disposed at both sides of the third plate, respectively, and parallel with each other; a pair of inclined portions which is extended from the pair of first portions, respectively, and has an interval therebetween that is gradually decreased; and a pair of second portions which is extended from the pair of inclined portions, respectively, and parallel with each other.

In addition, a connecting surface between the first portion and the inclined portion or a connecting surface between the inclined portion and the second portion may preferably be tapered or rounded.

According to a further preferred embodiment of the invention the pair of second plates may be formed symmetrically.

In addition, a filter may preferably be disposed in front of the pair of second plates.

According to the present disclosure, the air discharge unit is disposed so as to allow air to flow from the rear side to the front side, a protruding portion of the third plate is provided, and a duct structure of the second plates, which is symmetrically formed to become narrower, is provided, such that the occurrence of a turbulent flow is prevented regardless of output of the air discharge unit, thereby providing the over-the-range microwave oven that is excellent in terms of electric power consumption characteristics, and reducing noise.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a perspective view illustrating an over-the-range microwave oven according to an exemplary embodiment of the present disclosure in which an upper housing and a lateral side housing are removed.
FIG. 2 is a top view of FIG. 1.
FIG. 3 is a view illustrating air flows in the over-the-range microwave oven according to the exemplary embodiment of the present disclosure.

### DETAILED DESCRIPTION

In the following detailed description, reference is made to the accompanying drawing, which forms a part hereof.

Hereinafter, an exemplary embodiment of the present disclosure will be described in detail with reference to the accompanying drawings.

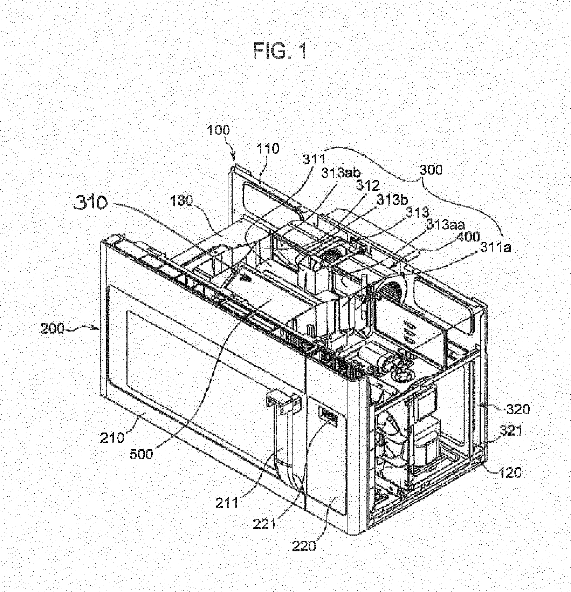

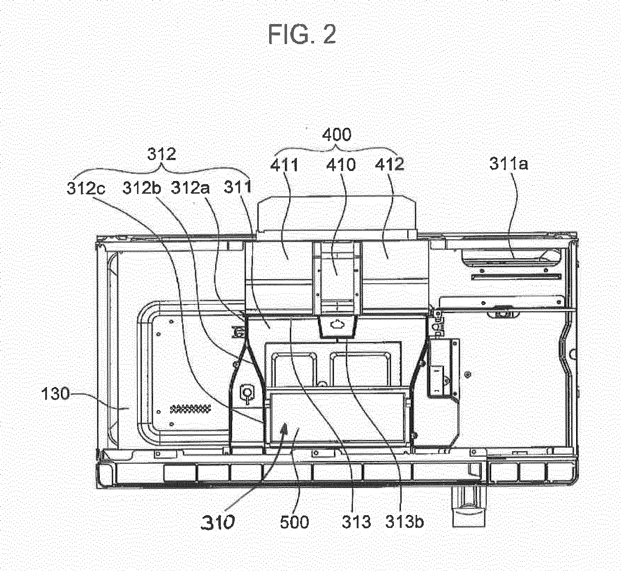

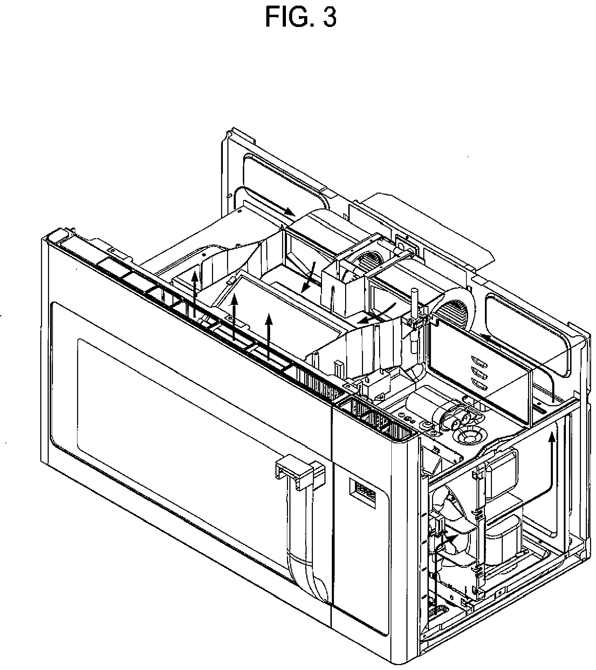

FIG. 1 is a perspective view illustrating an over-the-range microwave oven according to an exemplary embodiment of the present disclosure in which an upper housing and a lateral side housing are removed, FIG. 2 is a top view of FIG. 1, and FIG. 3 is a view illustrating an air flow in the over-the-range microwave oven according to the exemplary embodiment of the present disclosure.

Referring to FIGS. 1 and 2, the exemplary embodiment may widely include a housing 100, a cooking unit 200, a duct unit 300, and an air discharge unit 400, and may further include a filter unit 500.

The housing 100 defines an external appearance of the over-the-range microwave oven, and may be made of a metallic material or a nonmetallic material. The housing 100 may widely include an upper housing and a lateral side housing, which are not illustrated, and a rear housing 110 and a lower housing 120, which are illustrated. The respective housings 100 may be integrally formed or may be detachably coupled to each other.

In addition, the housing 100 may further include a partition housing 130 which may vertically partition the interior of the housing 100 into the cooking unit 200 and the duct unit 300. The partition housing 130 may be formed integrally with the housing 100, or may be fastened to the housing 100 by bolting.

In addition, the housing 100 may be formed as an outer wall of the duct unit 300 which will be described below.

The cooking unit 200 is disposed in the housing 100, and may include a cooking chamber, and an electric equipment chamber.

A door 210 may be disposed in the front of the cooking chamber. The door 210 may be hingedly coupled to the housing 100 so as to be closed and opened toward one side, and a handle 211 may be disposed on the door 210 so as to allow a user to easily open and close the door 210. In addition, in order to allow the user to easily observe the interior of the cooking chamber, the door 210 may further include a transparent window 212 made of tempered glass which is disposed at a center of the door 210.

In addition, the cooking unit 200 may be provided with a control panel 220 at one side of the door 210. The control panel 220 may include buttons, a touch panel, or a dial so as to allow the user to control the cooking unit 200, and may include a display unit 221 so as to allow the user to confirm various types of information of the over-the-range microwave oven according to the exemplary embodiment with the naked eye.

In addition, the control panel 220 may include buttons, a touch panel, or a dial so as to allow the user to operate the duct unit 300 which will be described below.

The duct unit 300 may be disposed in the housing 100. Specifically, the duct unit 300 is disposed between the housing 100 and the cooking unit 200 so as to form a flow path, and may be widely divided into an upper duct unit 310, and a lateral side duct unit 320.

The lateral side duct unit 320 is formed between the cooking unit 200 and the lateral side housing (not illustrated) or between the control panel 220 and the lateral side housing (not illustrated). In this case, the housing 100 may be formed as an outer wall of the duct unit 300.

Here, the lateral side duct unit 320 includes a first inlet port 321 which is opened at the lower housing 120 and into which outside air flows, and guides air flowing from the first inlet port 321 to flow to the upper duct unit 310 which will be described below. A plurality of first inlet ports 321 may be formed.

Meanwhile, the upper duct unit 310 may be disposed at an upper side of the cooking unit 200, and may include a first plate 311, second plates 312, and/or a third plate 313. By virtue of the upper duct unit 310, the exemplary embodiment may efficiently form an air discharge flow path from a rear side toward a front side, and may implement a hood and an over-the-range microwave oven which may reduce the occurrence of turbulent flows, electric power consumption, and noise even though a larger amount of driving power is used.

The first plate 311 may be disposed between the housing 100 and the cooking unit 200, may form a flow path, and may form a bottom surface of the duct unit 310.

Specifically, the first plate 311 is disposed in the housing 100 so as to form a bottom surface of the upper duct unit, and may be disposed at an upper side of the cooking unit 200 by being disposed at an upper side of the partition housing 130. In addition, the first plate 311 may be integrally formed as an upper surface of the partition housing 130.

In addition, the first plate 311 includes second inlet ports 311 a, at a rear side thereof, through which air flowing from the lateral side duct unit 320 flows into the upper duct unit 310. The second inlet ports 311 a may be formed at both sides at the rear side of the first plate 311, respectively, so as to correspond to a first impeller 411 and a second impeller 412 which will be described below.

The first plate 311 may be made of a metallic material or a plastic material.

At least a pair of second plates 312 may be disposed at both lateral sides of the first plate 311, and formed so that an interval therebetween is decreased from one side end toward the other side end.

Specifically, two second plates 312 are disposed as a pair between the first plate 311 and the housing 100 so as to form both lateral side surfaces of the upper duct unit, thereby partitioning the interior of the upper duct unit 310.

The pair of second plates 312 may be formed so that an interval therebetween is decreased in a direction from a portion, into which air flows, toward a portion where air is discharged. Specifically, the pair of second plates 312 may be formed to be symmetrically disposed so that an interval therebetween is decreased toward the front side.

Specifically, the pair of second plates 312 may include a pair of first portions 312a which is disposed at both sides of the third plate 313 which will be described below, respectively, and parallel with each other, a pair of inclined portions 312b which is extended from the pair of first portions 312a, respectively, and has an interval therebetween that is gradually decreased, and a pair of second portions 312c which is extended from the pair of inclined portions 312b, respectively, and parallel with each other.

The flow path, which is formed symmetrically and becomes narrower toward the front side, may greatly improve flow efficiency of the air discharge flow path compared to the related art, and may reduce the occurrence of noise.

Here, a connecting surface between the first portion 312a and the inclined portion 312b or a connecting surface between the inclined portion 312b and the second portion 312c may be tapered or rounded, thereby more efficiently forming an air discharge flow path.

The third plate 313 is disposed at the rear of the pair of second plates 312, and may have inlet holes 313aa and 313ab into which air flows.

That is, referring to FIG. 3, according to the air discharge flow path according to the exemplary embodiment, air may pass through the first inlet port 321 formed at the lower side or at the lateral side, and the second inlet ports 311a formed in the first plate 311, may pass through the impellers 411 and 412 which will be described below, may flow into the inlet holes 313aa and 313ab, and then may be discharged to the outside through a flow path formed by the first plate 311, the second plates 312, and the upper housing 100.

In addition, the third plate 313 may include the first inlet hole 313aa which corresponds to the first impeller 411 which will be described below, and the second inlet hole 313ab which corresponds to the second impeller 412 which will be described below, thereby more effectively implementing an air flow.

In addition, the third plate 313 may further include a bent portion 313b, which is formed between the first inlet hole 313aa and the second inlet hole 313ab so as to protrude forward, thereby more efficiently implementing an air flow.

Therefore, in order to efficiently implement a functional feature of preventing a turbulent flow, the bent portion 313b may be formed in various shapes that become narrower toward the front side. For example, the bent portion 313b may be formed in a trapezoidal shape.

The air discharge unit 400 is disposed between the third plate 313 and a rear surface of the housing 100, and allows air to flow into the inlet holes 313aa and 313ab. Specifically, the air discharge unit 400 may include an air discharge motor 410, and the impellers 411 and 412 which are operated by the air discharge motor 410 and allow air to flow into the inlet holes 313aa and 313ab.

Here, the impellers 411 and 412 include the first impeller 411 which is disposed at one side of the air discharge motor 410, and the second impeller 412 which is disposed at the other side of the air discharge motor 410. Both ends of the first impeller 411 and the second impeller 412 are disposed to correspond to the aforementioned second inlet ports 311 a, respectively, thereby allowing air sucked from the outside to flow into a space formed by the housing 100, the first plate 311, and the second plates 312.

The filter unit 500 may be disposed at the front side of the pair of second plates 312, and specifically, may be disposed on the second portion 312c. The filter unit 500 may be implemented as a charcoal filter, may filter air that is finally discharged to the outside, and may be disposed detachably.

A method of using the over-the-range microwave will be described below.

First, the air discharge unit 400 is operated using the buttons, the touch panel, or the dial disposed on the control panel 220.

Then, the air discharge motor 410 is operated by being supplied with external electric power such that both of the impellers 411 and 412 are axially rotated, and outside air flows from the first inlet port 321 of the lateral side housing into the over-the-range microwave oven according to the exemplary embodiment, and then flows into the impellers 411 and 412 through the second inlet ports 311a formed in the first plate 311.

Thereafter, air flowing into the impellers 411 and 412 is discharged at a high speed, and then flows into a duct, which is formed by the housing 100, the first plate 311, and the second plates 312, through the inlet holes 313aa and 313ab of the third plate 313.

In this case, the bent portion 313b formed on the third plate 313 guides the air flow toward the front side while preventing the occurrence of a turbulent flow of air flowing from the respective impellers 411 and 412. The shape of the second plates 312, which is symmetrically formed to become narrower, may allow air to be quickly discharged to the outside.

In addition, the filter is disposed between the second horizontal portions 312c that form the narrowest flow path, thereby effectively filtering contaminants.

That is, by the operated air discharge unit 400, air around a gas range or air flowing by a drive unit of a microwave oven may be discharged through the upper duct unit 310, which is disposed between the housing 100 and the cooking unit 200 and forms a flow path, and which includes the first plate 311 which is disposed at the upper side of the cooking unit 200, the pair of second plates 312 which is disposed between the first plate 311 and the housing 100 and disposed symmetrically so that an interval therebetween is decreased toward the front side, and the third plate 313 which is disposed at the rear of the pair of second plates 312 and has the inlet holes 313aa and 313ab into which air flows.

In summary, the exemplary embodiment of the present disclosure disposes the air discharge unit 400 at the rear side so as to guide air from the rear side toward the front side, and provides the flow path which is symmetrically formed to become narrower toward the discharge port in order to further increase the aforementioned effect.

## Claims

1. An over-the-range microwave oven comprising:
a housing (100) which defines an external appearance;
a cooking unit (200) which is disposed in the housing (100);
a duct unit (300) which is disposed in the housing (100) which duct unit (300) includes an upper duct unit (310) and a lateral site duct unit (320);
a first plate (311) which is disposed between the housing (100) and the cooking unit (200), forms a flow path, and forms a bottom surface of the upper duct unit (310); and
at least a pair of second plates (312) which is disposed at both lateral sides of the first plate (311) and disposed so that an interval therebetween is decreased from one side end toward the other side end;
an air discharge unit (400) which is disposed at the rear of the housing (100) and allows air to flow into an inlet hole (321),
wherein the air discharge unit (400) includes an air discharge motor (410), and an impeller (411, 412) which is operated by the air discharge motor (410) and allows air to flow into the inlet hole (321);
a third plate (313) which is disposed at the rear of the pair of second plates (312), wherein the third plate (313) includes a first inlet hole (313aa), and a second inlet hole (313ab), and the impeller includes a first impeller (411) which is disposed at one side of the air discharge motor (410) so as to allow air to flow into the first inlet hole (313aa), and a second impeller (412) which is disposed at the other side of the air discharge motor (410) so as to allow air to flow into the second inlet hole (313ab);
**characterized in that** the third plate (313) further includes a bent portion (313b) which protrudes forward between the first inlet hole (313aa) and the second inlet hole (313ab).

2. The over-the-range microwave oven of claim 1, **characterized in that** the bent portion (313b) becomes narrower toward the front side.

3. The over-the-range microwave oven of claim 1, **characterized in that** the bent portion (313b) is formed in a trapezoidal shape.

4. The over-the-range microwave oven of claim 1, **characterized in that** the pair of second plates (312) includes:
a pair of first portions (312a) which is disposed at both sides of the third plate (313), respectively, and parallel with each other;
a pair of inclined portions (312b) which is extended from the pair of first portions (312a), respectively, and has an interval therebetween that is gradually decreased; and
a pair of second portions (312c) which is extended from the pair of inclined portions (312b), respectively, and parallel with each other.

5. The over-the-range microwave oven of claim 4, **characterized in that** a connecting surface between the first portion (312a) and the inclined portion (312b) or a connecting surface between the inclined portion (312b) and the second portion (312c) is tapered or rounded.

6. The over-the-range microwave oven of claim 1, **characterized in that** the pair of second plates (312) is formed to be symmetrically disposed.

7. The over-the-range microwave oven of claim 1, **characterized in that** a filter (500) is disposed in front of the pairs of second plates (312a, 312b, 312c).

## Patentansprüche

1. Ein Mikrowellenherd mit integriertem Dunstabzug, umfassend:
ein Gehäuse (100), das ein äußeres Erscheinungsbild definiert;
eine in dem Gehäuse (100) angeordnete Gareinheit (200);
eine in dem Gehäuse (100) angeordnete Leitungseinheit (300), welche Leitungseinheit (300) eine obere Leitungseinheit (310) sowie eine laterale Seiten-Leitungseinheit (320) umfasst,
eine erste Platte (311), die zwischen dem Gehäuse (100) und der Gareinheit (300) angeordnet ist, eine Durchflussstrecke bildet und eine Bodenfläche der oberen Leitungseinheit (310) bildet, und
zumindest ein Paar zweiter Platten (312), das an beiden lateralen Seiten der ersten Platte (311) angeordnet ist und so angeordnet ist, dass ein dazwischen liegender Zwischenraum sich von einem Seitenende zum anderen Seitenende hin verjüngt,
eine Luft-Austragseinheit (400), die an der Rückseite des Gehäuses (100) angeordnet ist, so dass über sie Luft in eine Einlass-Öffnung (321) strömen kann,
wobei die Luft-Austragseinheit (400) einen Luft-Austragsmotor (410) sowie ein Lüfterrad (411,412) umfasst, das von dem Luft-Austragsmotor (410) betätigt wird, so dass Luft in die Einlass-Öffnung (321) strömen kann,
eine dritte Platte (313), die an der Rückseite des Paars zweiter Platten (312) angeordnet ist, wobei die dritte Platte (313) eine erste Einlass-Öffnung (313aa) sowie eine zweite Einlass-Öffnung (313ab) umfasst, und das Lüfterrad ein erstes Lüfterrad (411), das an einer Seite des Luft-Austragsmotors (410) angeordnet ist, so dass Luft in die erste Einlassöffnung (313aa) strömen kann, sowie ein zweites Lüfterrad (412), das am der anderen Seite des Luft-Austragsmotors (410) angeordnet ist, so dass Luft in die zweite Einlass-Öffnung (313ab) strömen kann, umfasst,
**dadurch gekennzeichnet, dass** die dritte Platte (313) ferner einen gebogenen Abschnitt (313b) umfasst, der zwischen der ersten Einlass-Öffnung (313aa) und der zweiten Einlass-Öffnung (313ab) nach vorne hervorsteht.

2. Der Mikrowellenherd mit integriertem Dunstabzug gemäß Anspruch 1, **dadurch gekennzeichnet, dass** der gebogene Abschnitt (313b) sich zur Vorderseite hin verjüngt.

3. Der Mikrowellenherd mit integriertem Dunstabzug gemäß Anspruch 1, **dadurch gekennzeichnet, dass** der gebogene Abschnitt (313b) trapezförmig ausgebildet ist.

4. Der Mikrowellenherd mit integriertem Dunstabzug gemäß Anspruch 1, **dadurch gekennzeichnet, dass** das Paar zweiter Platten (312b) umfasst:
ein Paar erster Abschnitte (312a), die jeweils an beiden Seiten der dritten Platte (313) angeordnet und parallel zueinander sind,
ein Paar geneigter Abschnitte (312b), die sich jeweils von dem Paar erster Abschnitte (312a) aus erstrecken und einen dazwischenliegenden Zwischenraum aufweisen, der sich schrittweise verjüngt, und
ein Paar zweiter Abschnitte (312c), die sich jeweils von dem Paar geneigter Abschnitte (312b) aus erstrecken und parallel zueinander sind.

5. Der Mikrowellenherd mit integriertem Dunstabzug gemäß Anspruch 4, **dadurch gekennzeichnet, dass** eine Verbindungsfläche zwischen dem ersten Abschnitt (312a) und dem geneigten Abschnitt (312b) oder eine Verbindungsfläche zwischen dem geneigten Abschnitt (312b) und dem zweiten Abschnitt (312c) kegelförmig oder abgerundet ist.

6. Der Mikrowellenherd mit integriertem Dunstabzug gemäß Anspruch 1, **dadurch gekennzeichnet, dass** das Paar zweiter Platten (312) so ausgebildet ist, dass es symmetrisch angeordnet ist.

7. Der Mikrowellenherd mit integriertem Dunstabzug gemäß Anspruch 1, **dadurch gekennzeichnet, dass** ein Filter (500) vor den Paaren zweiter Platten (312a, 312b, 312c) angeordnet ist.

## Revendications

1. Four à micro-ondes à hotte intégrée comprenant :
un boîtier (100) qui définit une apparence externe ;
une unité de cuisson (200) qui est disposée dans le boiter (100) ;
une unité de conduit (300) qui est disposée dans le boîtier (100), laquelle unité de conduit (300) comprend une unité de conduit supérieure (310) et une unité de conduit latérale (320) ;
une première plaque (311) qui est disposée entre le boîtier (100) et l'unité de cuisson (200), forme une trajectoire d'écoulement, et forme une surface inférieure de l'unité de conduit supérieure (310) ; et
au moins une paire de deuxièmes plaques (312) qui est disposée des deux côtés latéraux de la première plaque (311) et disposée de sorte qu'un intervalle entre elles diminue d'une extrémité latérale vers l'autre extrémité latérale ;
une unité de décharge d'air (400) qui est disposée à l'arrière du boîtier (100) et permet à l'air de s'écouler dans un trou d'entrée (321),
dans lequel l'unité de décharge d'air (400) comprend un moteur de décharge d'air (410), et une roue (411, 412) qui est actionnée par le moteur de décharge d'air (410) et permet à l'air de s'écouler dans le trou d'entrée (321) ;
une troisième plaque (313) qui est disposée à l'arrière de la paire de deuxièmes plaques (312), dans lequel la troisième plaque (313) comprend un premier trou d'entrée (313aa), et un second trou d'entrée (313ab), et la roue comprend une première roue (411) qui est disposée d'un côté du moteur de décharge d'air (410) afin de permettre à l'air de s'écouler dans le premier trou d'entrée (313aa), et une seconde roue (412) qui est disposée de l'autre côté du moteur de décharge d'air (410) afin de permettre à l'air de s'écouler dans le second trou d'entrée (313ab) ;
**caractérisé en ce que** la troisième plaque (313) comprend en outre une partie pliée (313b) qui fait saillie vers l'avant entre le premier trou d'entrée (313aa) et le second trou d'entrée (313ab).

2. Four à micro-ondes à hotte intégrée selon la revendication 1, **caractérisé en ce que** la partie pliée (313b) devient plus étroite vers le côté avant.

3. Four à micro-ondes à hotte intégrée selon la revendication 1, **caractérisé en ce que** la partie pliée (313b) est formée selon une forme trapézoïdale.

4. Four à micro-ondes à hotte intégrée selon la revendication 1, **caractérisé en ce que** la paire de deuxièmes plaques (312) comprend :
une paire de premières parties (312a) qui est disposée des deux côtés de la troisième plaque (313) respectivement et parallèlement entre elles ;
une paire de parties inclinées (312b) qui est étendue à partir de la paire de premières parties (312a) respectivement, et a un intervalle entre elles qui est progressivement diminué ; et
une paire de secondes parties (312c) qui est étendue à partir de la paire de parties inclinées (312b) respectivement et parallèlement entre elles.

5. Four à micro-ondes à hotte intégrée selon la revendication 4, **caractérisé en ce qu'**une surface de raccordement entre la première partie (312a) et la partie inclinée (312b) ou une surface de raccordement entre la partie inclinée (312b) et la seconde partie (312c) est progressivement rétrécie ou arrondie.

6. Four à micro-ondes à hotte intégrée selon la revendication 1, **caractérisé en ce que** la paire de deuxièmes plaques (312) est formée pour être disposée de manière symétrique.

7. Four à micro-ondes à hotte intégrée selon la revendication 1, **caractérisé en ce qu'**un filtre (500) est disposé en face des paires de deuxièmes plaques (312a, 312b, 312c).
